(19) Europäisches Patentamt
European Patent Office
Office européen des brevets

(11) Veröffentlichungsnummer: **0 257 356**
**B1**

(12) # EUROPÄISCHE PATENTSCHRIFT

(45) Veröffentlichungstag der Patentschrift: **24.10.90**

(51) Int. Cl.⁵: **C08G 77/38**, B01D 19/04, C08L 83/06

(21) Anmeldenummer: **87111174.6**

(22) Anmeldetag: **03.08.87**

(54) **Neue Alkoxysiloxane deren Herstellung und Verwendung als Entlüftungsmittel für härtbare Harze oder Plastisole.**

(30) Priorität: **16.08.86 DE 3627782**

(43) Veröffentlichungstag der Anmeldung:
**02.03.88 Patentblatt 88/9**

(45) Bekanntmachung des Hinweises auf die Patenterteilung:
**24.10.90 Patentblatt 90/43**

(84) Benannte Vertragsstaaten:
**BE DE FR GB IT NL**

(56) Entgegenhaltungen:
**EP-A- 0 058 299**
**EP-A- 0 084 679**
**US-A- 3 133 111**

(73) Patentinhaber: **Th. Goldschmidt AG,**
**Goldschmidtstrasse 100 Postfach 101461,**
**D-4300 Essen 1(DE)**

(72) Erfinder: **Berger, Roland, Dr., Spelbergs Busch 6,**
**D-4630 Bochum 6(DE)**
Erfinder: **Fink, Hans-Ferdi, Brassertstrasse 46,**
**D-4300 Essen 1(DE)**
Erfinder: **Klocker, Otto, Überruhrstrasse 420,**
**D-4300 Essen 14(DE)**

**EP 0 257 356 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Alkoxymethylpolysiloxane, Verfahren zur Herstellung dieser Verbindungen sowie die Verwendung dieser neuen Verbindungen als Entlüftungsmittel für insbesondere lösungsmittelarme oder lösungsmittelfreie härtbare Harze oder Plastisole.

Bei der Beschichtung von Oberflächen mit härtbaren Harzen oder Plastisolen, sowie bei der Herstellung von Formkörpern durch Eingießen von härtbaren Harzen in Formen und Aushärten der Harze in den Formen bilden sich häufig kleine Gasblasen, die in der Regel feindispers in der organischen Phase verteilt sind. Ein Teil dieser Bläschen schwimmt zur Lackoberfläche auf, zerplatzt dort und verursacht keine Störungen, solange die Fließfähigkeit des Lack- oder Plastisolfilms noch groß genug ist, um durch Nachfließen die gestörte Oberfläche wieder zu egalisieren. Ein anderer Teil der Bläschen steigt zur Oberfläche auf, platzt aber dort nicht mehr und bildet beim Erhärten des Lackes oder beim Ausgelieren des Plastisols eine sehr dünne, mechanisch leicht zu beschädigende Oberflächenhaut. Andere Bläschen bleiben im Film oder in den gebildeten Formkörpern verteilt. Derartige Störungen in einem Lackfilm werden als Nadelstiche (Pinholes) bezeichnet.

Das Phänomen dieses sogenannten Mikroschaumes ist nicht mit dem Verhalten und dem Erscheinungsbild eines üblichen, mehr oder weniger feinzelligen polyedrischen Schaumes zu vergleichen. Während die an sich bekannten Schaumbeseitigungs- oder Schaumverhütungsmittel die Lamellen, also die Trennwände zwischen den einzelnen Schaumblasen, zer stören oder deren stabile Ausbildung verhindern, sind bei den Mikroschäumen Derartiger wasserverdünnbarer Beschichtungssysteme die einzelnen, meist kugelförmigen Gasbläschen soweit voneinander getrennt, daß sich zwischen den einzelnen Schaumkugeln keine Lamellen ausbilden. Aus diesem Grunde versagen auch die an sich bekannten Antischaummittel im Regelfall bei der Beseitigung und Entfernung des Mikroschaumes, die auch als Entlüftung bezeichnet wird. Weitere Hinweise auf das unterschiedliche Verhalten zwischen Kugelschaum und Polyederschaum sind in "Ullmanns Encyclopädie der technischen Chemie", Band 20, S. 441 ff. gegeben.

Es ist zu vermuten, daß Vorgänge in der Grenzfläche Gasbläschen/Flüssigkeit die Entlüftung beeinflussen. Möglicherweise wird die Entlüftung durch die Veränderung der Viskosität des Beschichtungssystems in der Grenzfläche zum Gasbläschen beeinflußt. Jedenfalls ist es dem Fachmann aufgrund der unterschiedlichen physikalischen und/oder chemischen Beeinflussung der Grenzflächen zwischen Flüssigkeit und Gas nicht möglich, aus der Wirksamkeit von Antischaummitteln auf die Wirksamkeit von sogenannten Entlüftungsmitteln zu schließen.

Der Erfindung liegt die Aufgabe zugrunde, neue Verbindungen und Verfahren zu deren Herstellung zu finden, welche eine besonders hohe Wirksamkeit als Entlüftungsmittel für Beschichtungssysteme aufweisen. Unter Beschichtungssystemen sollen dabei im Sinne der Erfindung insbesondere solche Systeme verstanden werden, welche im wesentlichen wasserfrei sind und organische Lösungsmittel und inerte organische Lösungsmittel nicht oder nur in untergeordneter Menge enthalten. Die Beschichtungssysteme können sowohl auf der Basis von Reaktionslacken, wie auf der Basis von Plastisolen aufgebaut sein. Sie können übliche Zusatzstoffe wie Pigmente oder Füllstoffe enthalten.

Beispiele solcher härtbaren Harze (Reaktionslacke) sind solche auf Epoxidbasis, wobei als Härter Amine oder Amide dienen können. Ebenso geeignet sind ungesättigte Polyesterharze, die in Gegenwart eines ungesättigten Monomeren, wie Styrol, radikalisch polymerisiert werden. Als Plastisole werden meist solche verwendet, welche Homo- oder Copolymerisate des Polyvinylchlorids in einem geeigneten Weichmacher, wie Dioctylphthalat, dispergiert enthalten.

Überraschenderweise wurde gefunden, daß derartige härtbare Harze und Plastisole durch den Zusatz bestimmter neuer Alkoxysiloxane entlüftet werden können.

Ein Gegenstand vorliegender Erfindung sind deshalb Verbindungen der allgemeinen Formel

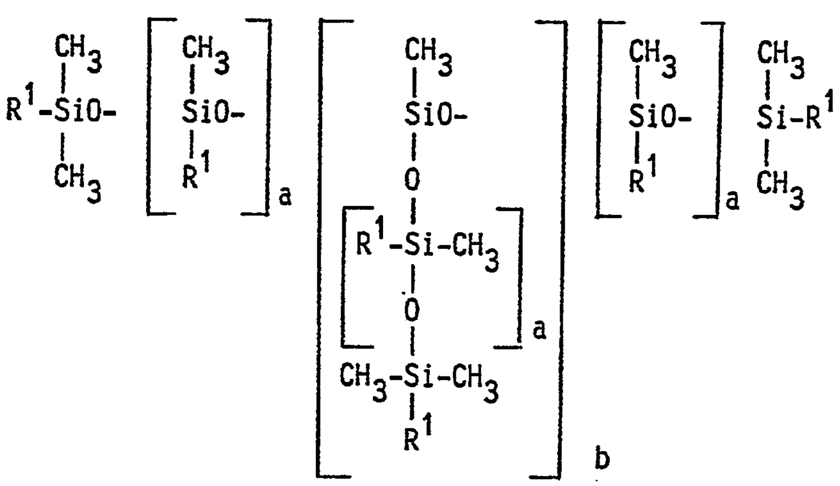

I

wobei $R^1$ ein Methylrest oder

der Rest 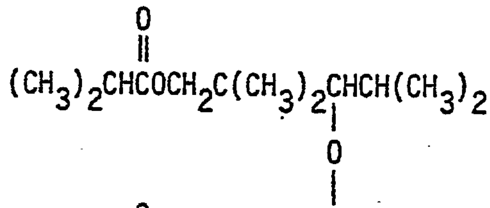 und/oder

der Rest 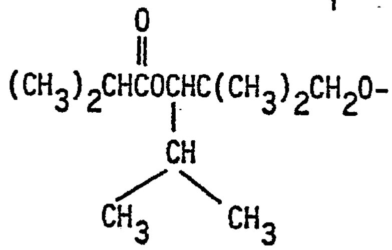 ,

die Summe der Einheiten a 0 bis 100,
die Summe der Einheiten b 0 bis 15 ist,
mit der Maßgabe, daß bei den Resten $R^1$ das Verhältnis von Methyl- zu Alkoxyresten $< 50 : 1$ ist, und $b \geqq 1$ ist, wenn $a = 0$ ist und $a \geqq 5$ ist, wenn $b = 0$ ist.

Bei der allgemeinen Formel I handelt es sich um eine Durchschnittsformel. Die Verbindungen liegen in der Regel in Form eines Gemisches vor, welches in bezug auf seine Molekulargewichtsverteilung und die Anordnung der Siloxyeinheiten einer statistischen Verteilung entspricht oder dieser angenähert ist.

Von besonderer Bedeutung ist dabei die an das Siloxangerüst gebundene Gruppe $R^1$. Liegt diese Gruppe in Form der in Patentanspruch 1 genannten Alkoxygruppe vor, kann diese in zwei sterisch voneinander unterschiedenen Formen vorliegen, wobei im durchschnittlichen Molekül üblicherweise das Gemisch beider Reste vorliegt.

Der Index a bezeichnet die Anzahl der difunktionellen Siloxyeinheiten und damit die Länge der Siloxankette(n).

Der Index b bezeichnet die Anzahl der trifunktionellen Siloxyeinheiten. Da die erfindungsgemäßen Alkoxypolysiloxane unverzweigt vorliegen können, kann b einen Wert von 0 annehmen.

Besonders bevorzugt sind Verbindungen, bei denen a einen Wert von 3 bis 6 und b einen Wert von 1 bis 3 hat. Weiterhin sind besonders Verbindungen bevorzugt, bei denen die Summe der Werte a 10 bis 60 beträgt, wenn b den Wert 0 hat. Beispiele solcher neuen Verbindungen sind

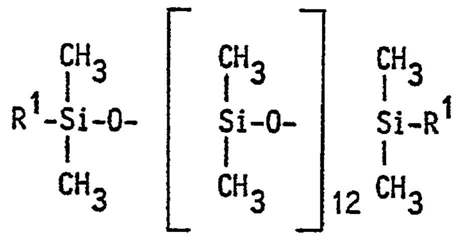 ,

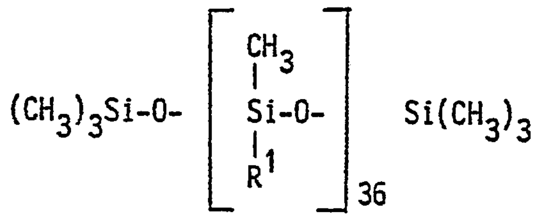

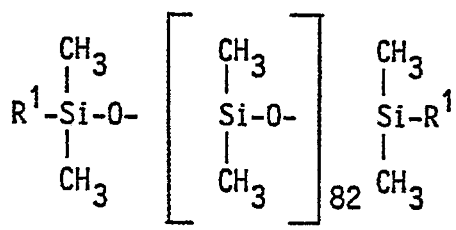

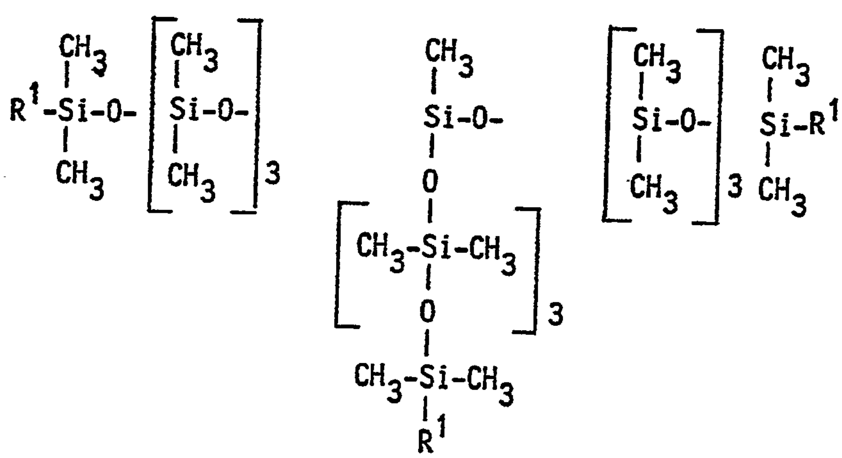

Die neuartigen Alkoxysiloxane können in an sich bekannter Weise entsprechend den bereits bekannten Alkoxypolysiloxanen des Standes der Technik dadurch hergestellt werden, daß man Siloxane der Formel

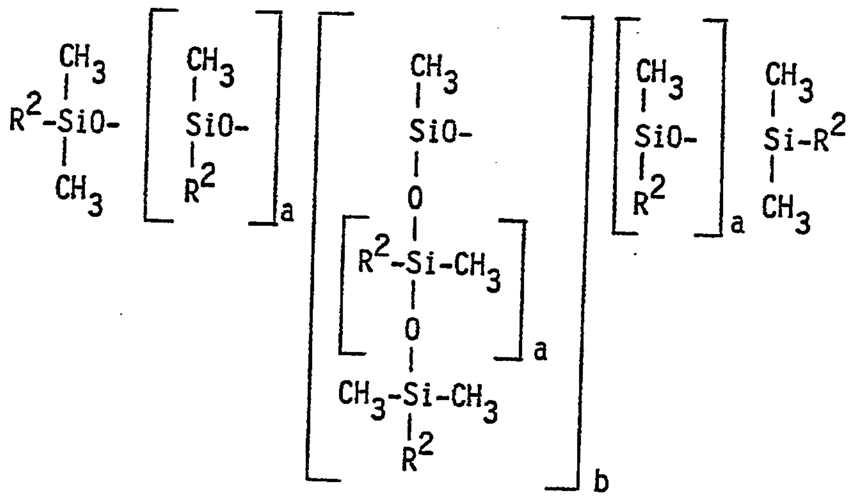

II

wobei $R^2$ ein Methylrest, ein Wasserstoff-, Halogen- oder Alkoxyrest mit 1 bis 4 Kohlenstoffatomen ist und das Verhältnis der Methylreste zu den übrigen Resten < 50 : 1 ist und a und b die angegebenen Zahlenwerte haben, mit, bezogen auf die Wasserstoff-, Halogen- oder Alkoxyreste, mindestens äquimolaren Mengen Alkoholen der Formel

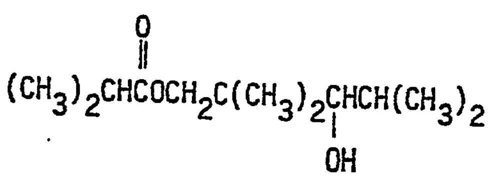

und/oder

III

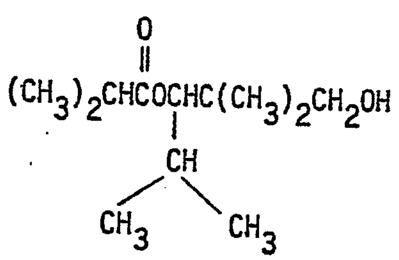

IV

bei gegebenenfalls erhöhter Temperatur und gegebenenfalls in Gegenwart von Katalysatoren in an sich bekannter Weise umsetzt.

Ist $R^2$ ein Halogenrest, ist der Chlorrest bevorzugt. Ein Teil der Chlorreste kann durch äquivalente Mengen Sulfatreste ersetzt sein. Diese Halogensiloxane der Formel II werden mit den Alkoholen der Formel III und IV in Gegenwart basischer Verbindungen als Säurefänger, vorzugsweise Ammoniak, umgesetzt. Die Umsetzung kann in Gegenwart eines Lösungsmittels erfolgen. Als Lösungsmittel ist Benzol oder Toluol geeignet. Nach der Umsetzung trennt man aus dem Reaktionsgemisch durch Filtration die ausgefallenen Halogenide, z.B. Ammoniumchloride, ab und entfernt destillativ das Lösungsmittel. Ein derartiges Herstellverfahren ist in der US-PS 3 115 512 beschrieben.

Hat $R^2$ die Bedeutung eines Alkoxyrestes mit 1 bis 4 Kohlenstoffatomen, werden die Alkoxysiloxane der Formel II mit den Alkoholen der Formel III und IV umgeestert. Die Austauschreaktion wird durch Alkalihydroxide oder durch Säuren, wie z.B. Trifluoressigsäure, katalysiert. Derartige Austauschreaktionen sind für kettenförmige Alkoxysiloxane in der DE-PS 1 012 602, für verzweigte Siloxane in der DE-PS 1 040 251 beschrieben. Die dort angegebenen Verfahrensweisen können auf die Verbindungen der Formel II direkt übertragen werden.

$R^2$ kann auch ein Wasserstoffrest sein. Die Umsetzung von Siloxanen mit SiH-Gruppen ist dem Fachmann bekannt und z.B. in "Journal of Organometallic Chemistry" 157 (1978), 153 bis 162, am Beispiel der Alkoholyse von SiH-Gruppen enthaltenden Silanen beschrieben.

Die Verbindungen der allgemeinen Formel I zeigen die gewünschte hohe Wirksamkeit als Entlüftungsmittel. Sie werden den Beschichtungssystemen in Mengen von 0,05 - 1 Gew.-% zugesetzt. Die zuzugebende Menge der erfindungsgemäßen Verbindungen hängt von der Art der Beschichtungssysteme und insbesondere davon ab, ob und in welcher Menge dem Beschichtungssystem Füllstoffe zugesetzt sind. Je höher der Zusatz an Füllstoffen ist, um so höher muß die zugesetzte Entlüftungsmittelmenge sein.

Die Verbindungen der Formel I können den Beschichtungssystemen als solche oder in gelöster Form zugesetzt werden. Als Lösungsmittel für die erfindungsgemäßen Alkoxysiloxane eignen sich aromatische Kohlenwasserstoffe, wie Benzol, Toluol, ferner Ester und Ether wie z.B. Ethylglykolacetat, Butylglykol, sowie Glykole wie z.B. Propylenglykol. Es ist auch möglich, als Lösungsmittel Alkohol der Formel III und IV zu verwenden.

Die Wirksamkeit der erfindungsgemäßen Alkoxysiloxane der Formel I kann noch dadurch gesteigert werden, daß man die Verbindungen gemeinsam mit feindisperser Kieselsäure den Beschichtungssystemen zusetzt. Das Mischungsverhältnis der Verbindungen der Formel I zu feindisperser Kieselsäure soll dabei 99 : 1 bis 70 : 30, vorzugsweise etwa 95 : 5 betragen. Die feindisperse Kieselsäure wird zweckmäßig in an sich bekannter hydrophobierter Form verwendet.

In den folgenden Beispielen wird die Herstellung der erfindungsgemäßen neuen Verbindungen und deren erfindungsgemäße Verwendung als Entlüftungsmittel näher gezeigt:

Beispiel 1

In einem 1 l 2-Halskolben werden 75,6 g eines Gemisches der Alkohole der Formel III und IV (0,35 Mol) mit 350 g Toluol gemischt. Zur azeotropen Trocknung werden ca. 100 g Toluol abdestilliert. Anschließend werden bei 75 - 80 °C 182,2 g eines α,ω-Dichlorpolysiloxans der mittleren Kettenlänge (2 a + 2 = 14 (0,166 ml)) zugetropft. Das entstehende HCl wird während der Reaktion soweit wie möglich ausgetrieben. Nach beendeter Nachreaktion wird bei Raumtemperatur mit 0,9 g Monomethylethanolamin in 13 g Ethanol neutralisiert und das Reaktionsprodukt vom Lösungsmittel befreit (Ausbeute: 239,9 g = 96 %).

Analysen: Cl < 0,0190; OH: 0,13 %

Beispiel 2

Entlüftungsmittel mit einem Gehalt an erfindungsgemäßen Verbindungen:
50 g Alkoxysiloxan der Formel I, 45 g Butylglykol und 5 g hydropho bierte, feinteilige Kieselsäure werden mit einem Schnellrührer miteinander vermischt. Die verwendeten Siloxane haben folgende Indices:

| | Zahlenwert von | |
|---|---|---|
| | a | b |
| Siloxan 1 | 6 | 0 |
| Siloxan 2 | 10 | 0 |
| Siloxan 3 | 22 | 0 |
| Siloxan 4 | 37,5 | 0 |
| Siloxan 5 | 41 | 0 |
| Siloxan 6 | 5,2 | 2 |

b) Entlüftungsmittel des Standes der Technik
Vergleichsprodukt A = Siloxan der allgemeinen Formel

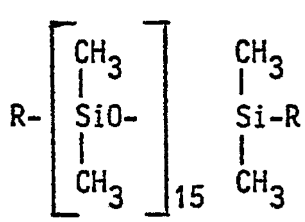

$R = C_4H_9O(C_3H_6O)_{30}-$

Im Handel unter der Bezeichnung Tegopren 1484 erhältlich.
Vergleichsprodukt B = In organischen Lösungsmitteln gelöstes 1,4-Polybutadien; im Handel unter der Bezeichnung Byk A 500 erhältlich.
Vergleichsprodukt C = In organischen Lösungsmitteln gelöstes Trifluorpropylgruppen enthaltendes Polysiloxan einer Viskosität von 300 mPa.sec; im Handel unter der Bezeichnung Byk A 505 erhältlich.

c) Prüfung der Wirksamkeit der Entlüftungsmittel:

$c_1$) Füllstofffreies Epoxidharz

In einem Rührgefäß werden 125 g eines Epoxidharzes mit einem Epoxidäquivalent von 200 und einer Viskosität von 500 - 100 mPa (im Handel unter der Bezeichnung Beckopox EP 128 erhältlich) mit 75 g eines modifizierten cycloaliphatischen Polyamins als Härter (im Handel unter der Bezeichnung Euredur 43 S erhältlich) und 2 g des zu prüfenden Entlüftungsmittels mit einem Rührer mit Disperserscheibe (Durchmesser 3 cm, 4 m . $sec^{-1}$ Umfangsgeschwindigkeit) 5 Minuten miteinander vermischt. Dabei wird eine erhebliche Menge Luft in die Mischung eindispergiert. Dieses Gemisch wird in Formen mit den Abmessungen 40 x 75 x 5 mm gegossen, die zuvor mit einem Trennlack aus Polyvinylalkohol beschichtet und dann getrocknet wurden. Nach 24 Stunden werden die gehärteten Gießlinge der Form entnommen und die Oberfläche auf Verlaufstörungen beobachtet. Die Gießlinge werden außerdem im Durchlicht auf Lufteinschlüsse oder Eindrückungen beobachtet.

Unregelmäßige Oberflächen, verursacht durch nicht aufgeplatzte Mikroblasen oder nicht zusammengeflossene Krater, die aus aufgeplatzten Mikroblasen entstanden sind, werden von den Verarbeitern solcher Systeme ebenso wenig gewünscht wie Eintrüben des Harzes, hervorgerufen durch das Additiv. Der Formling soll möglichst frei von in der Schicht eingelagerten Luftblasen sein.

$c_2$) In einem Rührgefäß werden 146 g Quarzsand einer Korngröße > 0,5 mm mit 34 g des vorgenannten Epoxidharzes, 20 g des vorgenannten Härters und 0,5 g des zu prüfenden Entlüftungsmittels, wie oben beschrieben, gemischt und in Formkästen gegossen. Nach dem Entformen wird die Oberfläche der Platten auf Verlaufstörungen untersucht. Die Oberfläche soll möglichst frei von Schaumblasen und Kratern sein.

d) Bei den Vergleichsversuchen werden folgende Ergebnisse erhalten:
$d_1$) Füllstofffreie Epoxidharze

Tabelle 1

| | Beschaffenheit der Prüfplatten | | |
|---|---|---|---|
| | Oberfläche | Trübung | Schaumblasen in der Platte |
| ohne Siloxan | sehr viele Blasen und Krater | nicht zu beurteilen | sehr viele |
| Siloxan 1 | glatte, blasen- und kraterfreie Oberfläche | keine | vereinzelte |
| Siloxan 2 | " | " | " |
| Siloxan 3 | " | " | keine |
| Siloxan 4 | " | " | keine |
| Siloxan 5 | " | " | keine |
| Siloxan 6 | " | " | keine |
| Vergleichsprodukt A | keine Krater | leichte Trübung | 28 Mikroblasen in der Platte |
| Vergleichsprodukt B | vereinzelte Krater | klar | 21 Mikroblasen in der Platte |
| Vergleichsprodukt C | vereinzelte Krater | klar | vereinzelte Mikroblasen in der Platte |

$d_2$) Füllstoffhaltiges Epoxidharz

Tabelle 2

| | Beschaffenheit der Prüfplatten |
|---|---|
| ohne Siloxan | dicht mit Blasen bedeckte Oberfläche, Blasenmesser bis ca. 1 mm, einige 2 - 3 mm große Krater |
| Siloxan 1 | 5 Mikroblasen (Durchmesser 0,5 mm), sonst, glänzende, glatte Oberfläche |
| Siloxan 2 | blasenfreie, glatte, glänzende Oberfläche |
| Siloxan 3 | " |
| Siloxan 4 | " |
| Siloxan 5 | " |
| Siloxan 6 | " |
| Vergleichsprodukt A | 25 Mikroblasen und 4 Krater an der Oberfläche, sonst glatte Oberfläche |
| Vergleichsprodukt B | 18 Mikroblasen und 5 Krater, sonst glatte Oberfläche |
| Vergleichsprodukt C | 14 Mikroblasen und 2 Krater, Oberfläche nicht so glänzend wie bei A 500 |

## Beispiel 3

Entlüftung eines Plastisols

In einen mit einer cm-Teilung versehenen Meßbecher werden 100 g einer Paste, bestehend aus 70 g Polyvinylchlorid und 30 g Dioctylphthalat, eingewogen. Das Becherglas wird dann in einen Vacuumexsikkator gebracht und dieser mit Hilfe einer Pumpe rasch bis auf 20 mbar evakuiert und bei diesem Druck belassen. Nach 1, 2 und 3 Minuten wird die Höhe des Schaumes, der sich durch die aus der Paste entweichende Luft bildet, gemessen (1. Messung). Nach 3 Minuten läßt man wieder Luft in den Exsikkator einströmen. Danach wird wiederum evakuiert, die Höhe des Schaumes zeitabhängig gemessen und Druckausgleich vorgenommen (2. Messung). Der Versuch wird ohne Entlüftungsmitel und mit Zusatz von 0,5 Gew.-% des erfindungsgemäßen Siloxan 6 durchgeführt. Dabei werden folgende Ergebnisse erhalten:

Tabelle 3

| | Schaumhöhe in cm nach | | | | | |
|---|---|---|---|---|---|---|
| | 1. Messung /¯Min._7 | | | 2. Messung /¯Min._7 | | |
| | 1 | 2 | 3 | 1 | 2 | 3 |
| ohne Silicon | 8 | 8 | 8 | 5 | 0,6 | 0,6 |
| mit erfindungsgemäßem Siloxan 6 | 2 | 0,5 | 0,5 | 0,4 | 0,4 | 0,4 |

**Patentansprüche**

1. Verbindungen der allgemeinen Formel

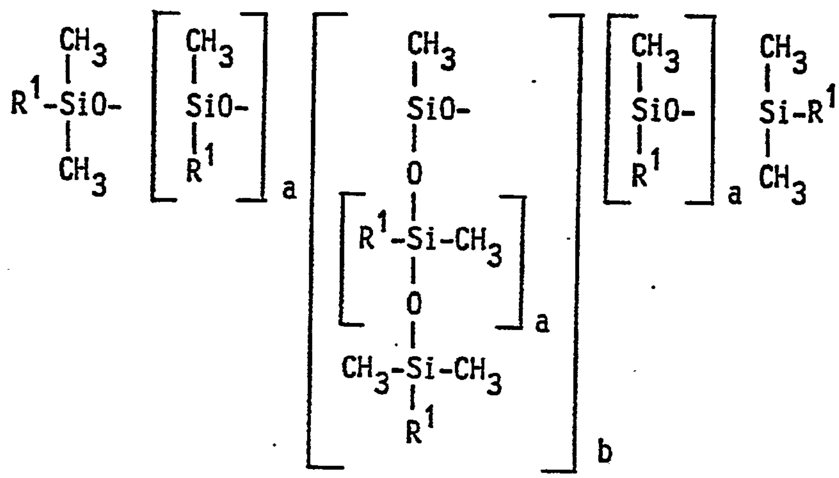

wobei $R^1$ ein Methylrest oder

der Rest 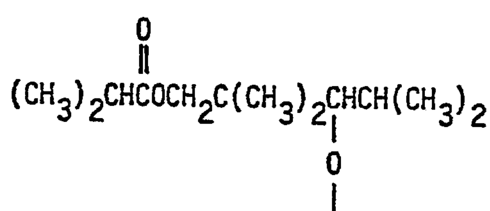 und/oder

der Rest 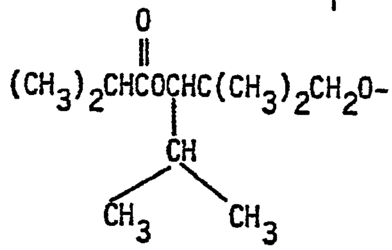 ,

die Summe der Einheiten a 0 bis 100,
die Summe der Einheiten b 0 bis 15 ist,
mit der Maßgabe, daß bei den Resten $R^1$ das Verhältnis von Methyl- zu Alkoxyresten $< 50 : 1$ ist, und $b \geqq 1$ ist, wenn $a = 0$ ist und $a \geqq 5$ ist, wenn $b = 0$ ist.

2. Verfahren zur Herstellung der Verbindungen des Anspruchs 1, dadurch gekennzeichnet, daß man Siloxane der Formel

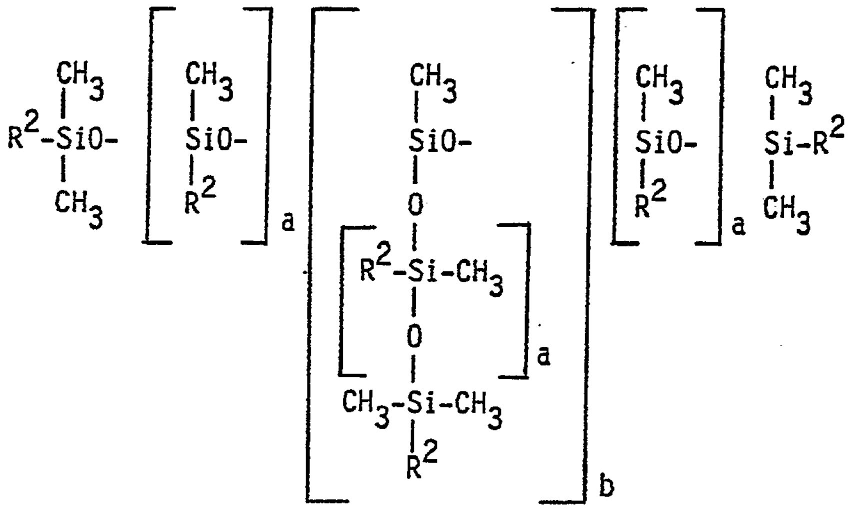

wobei $R^2$ ein Methylrest, ein Wasserstoff-, Halogen- oder Alkoxyrest mit 1 bis 4 Kohlenstoffatomen ist und das Verhältnis der Methylreste zu den übrigen Resten $< 50 : 1$ ist, die Summe der Einheiten $a = 0$ bis 100 und die Summe der Einheiten $b = 0$ bis 15 ist, mit der Maßgabe, daß $b \geqq 1$, wenn $a = 0$ ist und $a \geqq 5$ ist, wenn $b = 0$ ist, mit, bezogen auf die Wasserstoff-, Halogen- oder Alkoxyreste, mindestens äquimolaren Mengen Alkoholen der Formel

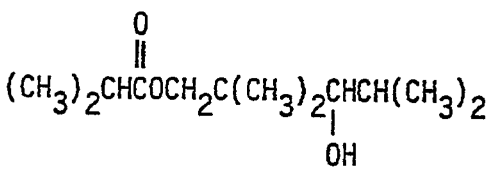 und/oder

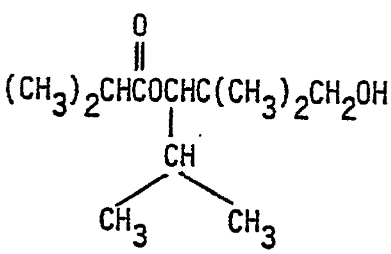

bei gegebenenfalls erhöhter Temperatur und gegebenenfalls in Gegenwart von Katalysatoren in an sich bekannter Weise umsetzt.

3. Verwendung der Verbindungen des Anspruchs 1 als Entlüftungsmittel für insbesondere lösungsmittelarme oder lösungsmittelfreie härtbare Harze oder Plastisole in Mengen von 0,05 bis 1 Gew.-%, bezogen auf Harz (Plastisol).

## Revendications

1. Composés de formule générale

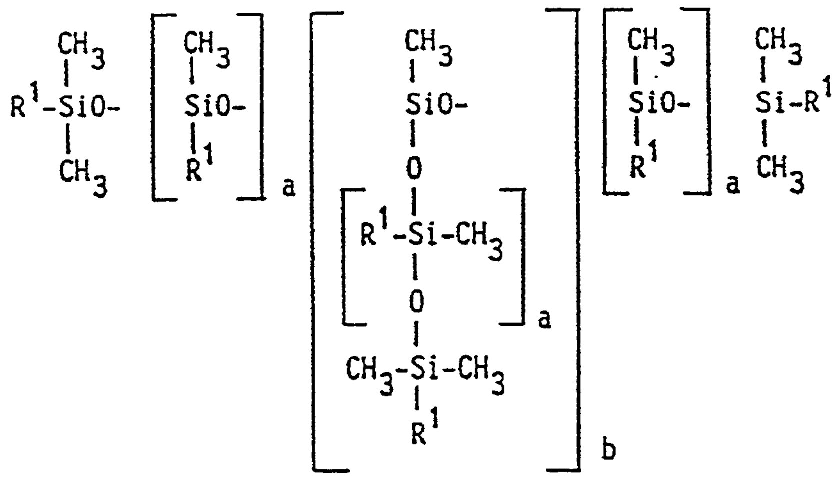

dans laquelle
$R^1$ est un groupe méthyle ou

le groupe 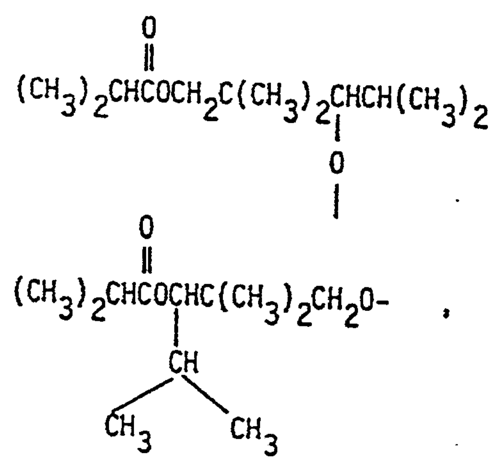 et/ou

le groupe ,

la somme des unités a = 0 à 100
la somme des unités b = 0 à 15,
à condition que dans les groupes $R^1$ le rapport groupes méthyle/groupes alcoxy soit inférieur à 50:1 et que b ≥ 1 lorsque a = 0, et que a ≥ 1 lorsque b = 0.

2. Procédé de préparation des composés de la revendication 1, caractérisé en ce qu'on fait réagir, d'une manière connue, à une température éventuellement augmentée et, le cas échéant, en présence de catalyseurs, des siloxanes répondant à la formule

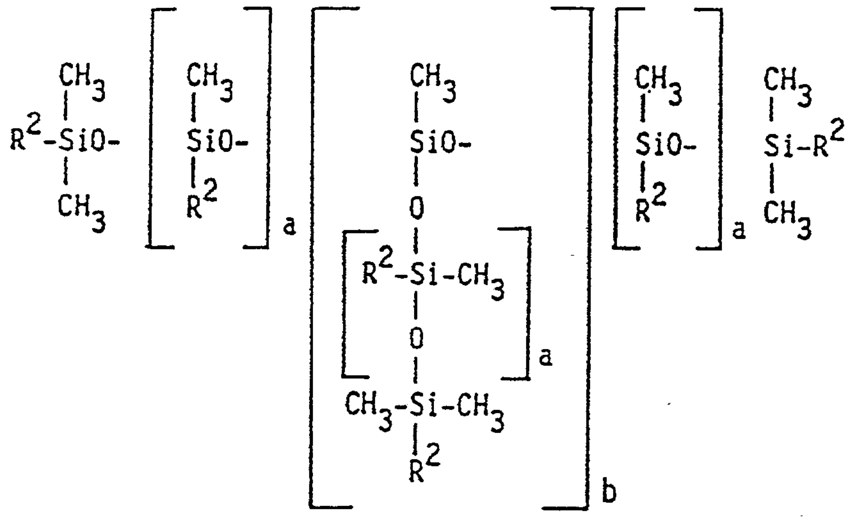

dans laquelle
$R^2$ est un groupe méthyle, un groupe hydrogène, halogène ou alcoxy contenant de 1 à 4 atomes de carbone et la proportion des groupes méthyle par rapport aux autres groupes est inférieure à 50:1,
la somme des unités a = 0 à 100
la somme des unités b = 0 à 15,
à condition que b ≥ 1 lorsque a = 0 et que a ≥ 5 lorsque
b = 0,
avec, par rapport aux groupes hydrogène, halogène ou alcoxy, au moins des quantités équimolaires en alcools de formule

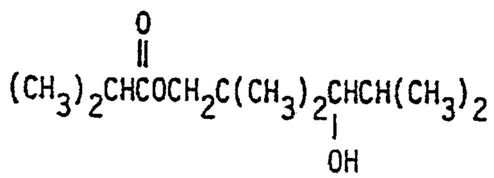

et/ou

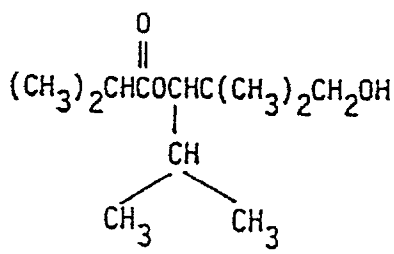

3. Mise en œuvre des composés de la revendication 1 en tant qu'agents de désaération pour des résines durcissables particulièrement pauvres en solvants ou exemptes de solvants ou des plastisols, à raison de 0,05 à 1% en poids par rapport à la résine (plastisol).

**Claims**

1. Compounds of the general formula

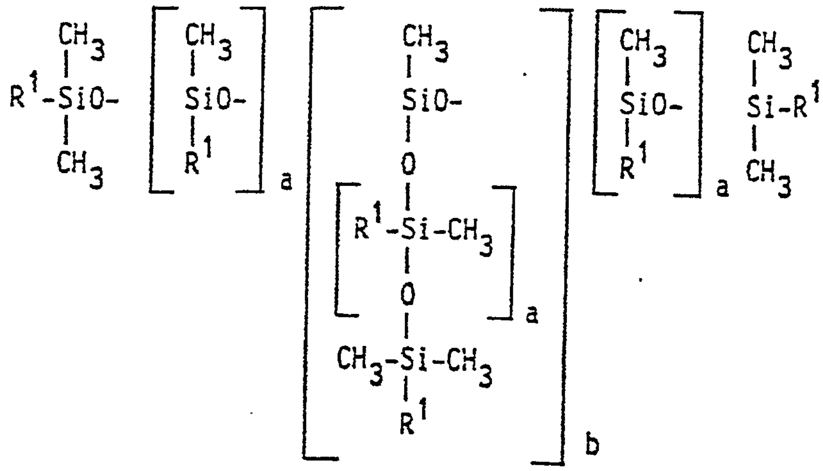

in which $R^1$ is a methyl radical or

the radical 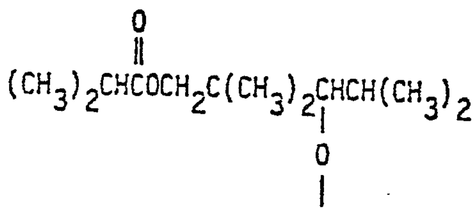 and/or

the radical 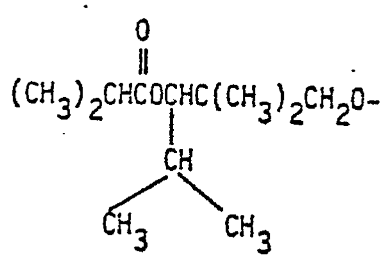 ,

the sum of the units a is 0 to 100,
the sum of the units b is 0 to 15,
with the proviso that in the case of the radicals $R^1$ the ratio of methyl to alkoxy radicals ? 50:1, and $b \geq 1$ if $a = 0$ and $a \geq 5$ if $b = 0$.

2. Process for the preparation of the compounds of Claim 1, characterized in that siloxanes of the formula

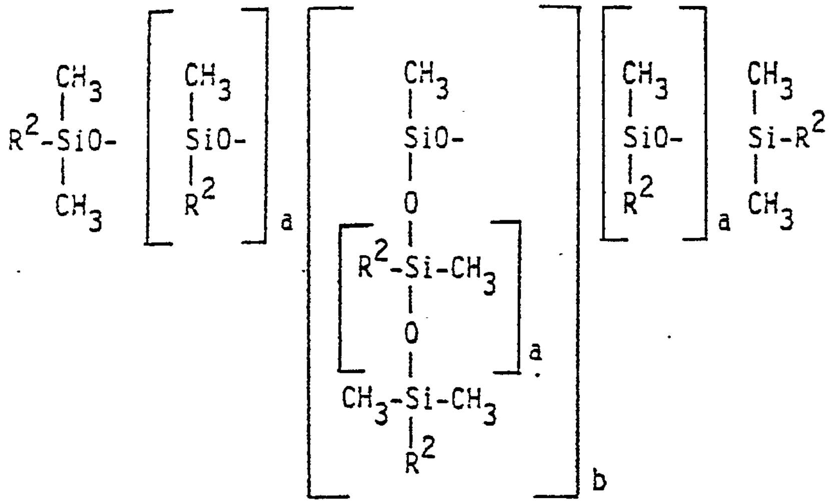

in which $R^2$ is a methyl, hydrogen, halogen or alkoxy radical having 1 to 4 carbon atoms and the ratio of the methyl radicals to the other radicals < 50:1, the sum of the units a = 0 to 100 and the sum of the units b = 0 to 15, with the proviso that b ≥ 1 if a = 0 and a ≥ 5 if b = 0 is reacted with, relative to the hydrogen, halogen or alkoxy radicals, at least equimolar amounts of alcohols of the formula

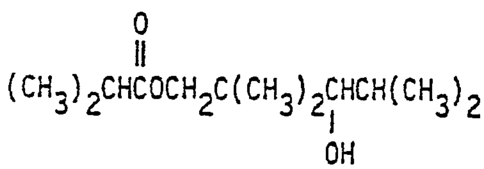

and/or

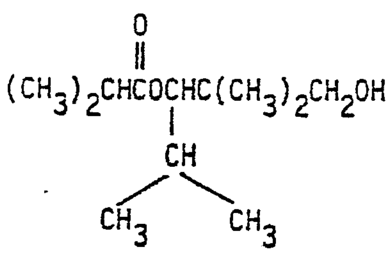

in a manner known per se optionally at elevated temperature and optionally in the presence of catalysts.

3. The use of the compounds of Claim 1 as degassing agents, in particular for low-solvent or solvent-free curable resins or plastisols, in amounts of from 0.05 to 1% by weight, relative to the resin (plastisol).